(19) Europäisches Patentamt
European Patent Office
Office européen des brevets

(11) EP 4 372 862 A1

(12) # EUROPEAN PATENT APPLICATION
published in accordance with Art. 153(4) EPC

(43) Date of publication:
**22.05.2024 Bulletin 2024/21**

(21) Application number: **23740480.1**

(22) Date of filing: **12.01.2023**

(51) International Patent Classification (IPC):
***H01M 10/0583*** (2010.01) ***H01M 50/449*** (2021.01)
***H01M 10/0565*** (2010.01) ***H01M 50/46*** (2021.01)

(52) Cooperative Patent Classification (CPC):
**H01M 10/04; H01M 10/0565; H01M 10/0583; H01M 50/449; H01M 50/46;** Y02E 60/10; Y02P 70/50

(86) International application number:
**PCT/KR2023/000599**

(87) International publication number:
**WO 2023/136637 (20.07.2023 Gazette 2023/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.01.2022 KR 20220006079**
**14.01.2022 KR 20220006080**
**14.01.2022 KR 20220006081**
**14.01.2022 KR 20220006082**

(71) Applicant: **LG Energy Solution, Ltd.**
**Seoul 07335 (KR)**

(72) Inventors:
- **RYU, Ji-Hoon**
**Daejeon 34122 (KR)**
- **LIM, Tae-Seob**
**Daejeon 34122 (KR)**
- **KIM, Dong-Kyu**
**Daejeon 34122 (KR)**
- **YOON, Yeo-Min**
**Daejeon 34122 (KR)**
- **LEE, Jung-Pil**
**Daejeon 34122 (KR)**

(74) Representative: **Hoffmann Eitle**
**Patent- und Rechtsanwälte PartmbB**
**Arabellastraße 30**
**81925 München (DE)**

(54) **METHOD OF PREPARING GEL POLYMER ELECTROLYTE SECONDARY BATTERY AND GEL POLYMER ELECTROLYTE SECONDARY BATTERY THEREFROM**

(57) The present disclosure relates to a method for manufacturing a gel polymer electrolyte secondary battery which allows easy removal of the gases generated in the secondary battery, and provides the secondary battery with significantly improved resistance and life characteristics and improved mechanical properties and thus improved stiffness and safety.

FIG. 1

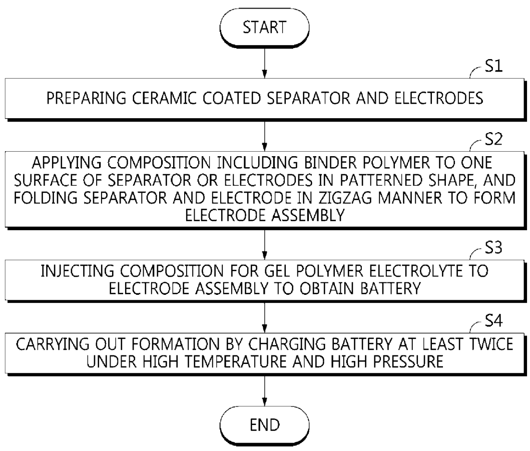


EP 4 372 862 A1

## Description

### TECHNICAL FIELD

The present disclosure relates to a method for manufacturing a lithium secondary battery including a gel polymer electrolyte and a gel polymer electrolyte secondary battery obtained thereby. The present application claims priority to Korean Patent Application No. 10-2022-0006079, Korean Patent Application No. 10-2022-0006080, Korean Patent Application No. 10-2022-0006081 and Korean Patent Application No. 10-2022-0006082, filed on January 14, 2022in the Republic of Korea, the disclosures of which are incorporated herein by reference.

### BACKGROUND ART

Recently, energy storage technology has been given an increasing attention. Efforts into research and development for electrochemical devices have been actualized more and more, as the application of energy storage technology has been extended to energy for cellular phones, camcorders and notebook PCs and even to energy for electric vehicles. In this context, electrochemical devices have been most spotlighted. Among such electrochemical devices, development of rechargeable secondary batteries has been focused.

Among the commercially available secondary batteries, lithium secondary batteries developed in the early 1990's have been spotlighted, since they have a higher operating voltage and significantly higher energy density as compared to conventional batteries, such as Ni-MH, Ni-Cd and sulfuric acid-lead batteries using an aqueous electrolyte.

Such lithium secondary batteries may be classified into lithium-ion batteries using a liquid electrolyte and lithium polymer batteries using a polymer electrolyte, depending on the electrolyte used specially therefor.

Lithium-ion batteries have an advantage of high capacity, but have a risk of electrolyte leakage and explosion due to the use of a lithium salt-containing liquid electrolyte. Therefore, lithium-ion batteries are disadvantageous in that they require a complicated battery design in order to provide against such a disadvantage.

On the other hand, lithium polymer batteries use a solid polymer electrolyte or an electrolyte-containing gel polymer electrolyte, and thus show improved safety and may have flexibility. Therefore, lithium polymer batteries may be developed into various types, such as compact batteries or thin film-type batteries. The gel polymer electrolyte may be classified into a coating-type gel polymer electrolyte and an injection-type gel polymer electrolyte, depending on the process for preparing the same. The injection-type gel polymer electrolyte may be prepared by injecting a liquid electrolyte including a crosslinkable monomer to a cell, wetting an electrode assembly uniformly with the liquid electrolyte, and carrying out a crosslinking process. During the crosslinking, the electrolyte forms a matrix and is converted into a gel-like electrolyte having no flowability. Such a gel electrolyte is advantageous in that it shows no flowability to eliminate the problem of leakage and improves the strength of a cell to be strongly resistant against external impact, thereby providing high physical safety.

Meanwhile, a lithium secondary battery is generally obtained through an assemblage step and formation step. The assemblage step includes a lamination step of binding a separator with electrodes, a step of injection an electrolyte, or the like. The formation step includes a step of carrying out charge and/or discharge under the condition required for the formation. However, in the formation step, a large amount of gases is generated inside of the secondary battery. If the generated gases are not removed, they are trapped in the secondary battery and occupy a certain amount of space, and thus cause deformation of the battery and adversely affect the performance, such as capacity and output, and life.

In the case of a secondary battery using a liquid electrolyte, the gases generated in the battery may be removed by applying pressure during or after the formation step.

However, a secondary battery using a gel polymer electrolyte is problematic in that the gases cannot be removed even when applying pressure during or after the formation step, since the electrolyte is already present in a gel state. Particularly, in the case of a gel polymer electrolyte secondary battery subj ected to lamination for binding of a separator with electrodes, the separator is adhered strongly to the electrodes. For this reason, the gases generated in the secondary battery cannot be discharged to the outside but are trapped at the separator-electrode interface to form bubbles or to disturb lithium migration, resulting in the problems of an increase in lithium-ion concentration in the vicinity of such bubbles and deposition of lithium.

Under these circumstances, there is a need for developing a method for manufacturing a gel polymer electrolyte secondary battery capable of removing the gases generated during the formation step.

### DISCLOSURE

#### Technical Problem

The present disclosure is designed to solve the problems of the related art, and therefore the present disclosure

is directed to providing a method for manufacturing a gel polymer electrolyte secondary battery which allows easy removal of the gases generated in the secondary battery and can provide significantly improved resistance and life characteristics.

The present disclosure is also directed to providing a method for manufacturing a gel polymer electrolyte secondary battery which provides the secondary battery with improved mechanical properties and thus improved stiffness and safety, and a gel polymer electrolyte secondary battery obtained thereby.

It will be easily understood that the objects and advantages of the present disclosure may be realized by the means shown in the appended claims and combinations thereof.

## Technical Solution

The inventors of the present disclosure have found that the above-mentioned technical problems can be solved by the method for manufacturing a gel polymer electrolyte secondary battery as described hereinafter and a gel polymer electrolyte secondary battery obtained thereby.

According to the first embodiment, there is provided a method for manufacturing a gel polymer electrolyte secondary battery, including the steps of:

(S1) preparing a ceramic coated separator and electrodes, wherein the ceramic coated separator includes a porous substrate and a ceramic coating layer, and the ceramic coating layer includes a first binder polymer and ceramic particles;
(S2) carrying out lamination of the separator and electrodes to provide an electrode assembly, wherein a composition including a second binder polymer is applied onto at least one surface of the separator or electrodes in a patterned shape, and the separator is folded in a zigzag manner so that the electrodes may be inserted to regions where the separator is overlapped;
(S3) injecting a composition for a gel polymer electrolyte to the electrode assembly to obtain a battery; and
(S4) carrying out formation by charging the battery at least twice under the conditions of a temperature of 50°C or higher and a pressure of 0.1-5 kgf/$cm^2$.

According to the second embodiment, there is provided the method for manufacturing a gel polymer electrolyte secondary battery as defined in the first embodiment, wherein the lamination in step (S2) is carried out at a temperature of 30°C or lower.

According to the third embodiment, there is provided the method for manufacturing a gel polymer electrolyte secondary battery as defined in the first or the second embodiment, wherein the lamination in step (S2) is carried out under the ambient pressure condition or under the condition of a pressure of 3 kgf/$cm^2$ or less applied to the electrode assembly.

According to the fourth embodiment, there is provided the method for manufacturing a gel polymer electrolyte secondary battery as defined in any one of the first to the third embodiments, wherein the lamination step is not carried out under the application of pressure, in step (S2).

According to the fifth embodiment, there is provided the method for manufacturing a gel polymer electrolyte secondary battery as defined in any one of the first to the fourth embodiments, wherein the content of the first binder polymer is 0.1-10 wt% based on the total weight of the ceramic coating layer.

According to the sixth embodiment, there is provided the method for manufacturing a gel polymer electrolyte secondary battery as defined in any one of the first to the fifth embodiments, wherein the first binder polymer is an acrylate-based binder polymer.

According to the seventh embodiment, there is provided the method for manufacturing a gel polymer electrolyte secondary battery as defined in any one of the first to the sixth embodiments, wherein the patterned shape includes at least one of a dot pattern, a stripe pattern and a grid pattern.

According to the eighth embodiment, there is provided the method for manufacturing a gel polymer electrolyte secondary battery as defined in any one of the first to the seventh embodiments, wherein the composition for a gel polymer electrolyte includes a polymerization initiator having a 10 hour half-life temperature of 60°C or lower, a polymerizable compound, a lithium salt and a nonaqueous organic solvent.

According to the ninth embodiment, there is provided the method for manufacturing a gel polymer electrolyte secondary battery as defined in any one of the first to the eighth embodiments, wherein the polymerization initiator has a 10 hour half-life temperature of 55°C or lower.

According to the tenth embodiment, there is provided the method for manufacturing a gel polymer electrolyte secondary battery as defined in any one of the first to the ninth embodiments, wherein the content of the polymerization initiator is 0.1-10 parts by weight based on 100 parts by weight of the composition for a gel polymer electrolyte.

According to the eleventh embodiment, there is provided the method for manufacturing a gel polymer electrolyte

secondary battery as defined in any one of the first to the tenth embodiments, wherein the pressure application in step (S4) includes applying pressure at least once by using a pressurizing device.

According to the twelfth embodiment, there is provided the method for manufacturing a gel polymer electrolyte secondary battery as defined in any one of the first to the eleventh embodiments, wherein step (S4) includes the steps of:

(S4a) carrying out primary charge at a temperature of 50-60°C under a pressure of 0.1-1 $kgf/cm^2$ to 20% or less of the capacity (state of charge, SOC) of the secondary battery; and
(S4b) carrying out secondary charge at a temperature of 50-60°C under a pressure of 3-5 $kgf/cm^2$ to 15-60% of the capacity (state of charge, SOC) of the secondary battery.

According to the thirteenth embodiment, there is provided the method for manufacturing a gel polymer electrolyte secondary battery as defined in any one of the first to the twelfth embodiments, which further includes the step of:
(S5) storing the battery subjected to formation in step (S4) at a temperature of 60°C or higher under a pressure of 3 $kgf/cm^2$ or more.

According to the fourteenth embodiment, there is provided the method for manufacturing a gel polymer electrolyte secondary battery as defined in any one of the first to the thirteenth embodiments, wherein step (S5) is carried out for 30 minutes to 5 hours.

According to the fifteenth embodiment, there is provided the method for manufacturing a gel polymer electrolyte secondary battery as defined in any one of the first to the fourteenth embodiments, wherein the pressure application in step (S5) includes applying pressure at least once by using a pressurizing device.

According to the sixteenth embodiment, there is provided the method for manufacturing a gel polymer electrolyte secondary battery as defined in any one of the first to the fifteenth embodiments, which further includes a step of carrying out vacuum sealing of the battery under a pressure of less than -95 kPa, after step (S3).

According to the seventeenth embodiment, there is provided the method for manufacturing a gel polymer electrolyte secondary battery as defined in any one of the first to the sixteenth embodiments, wherein the vacuum sealing step is carried out under a pressure of -100 kPa to -120 kPa.

According to the eighteenth embodiment, there is provided the method for manufacturing a gel polymer electrolyte secondary battery as defined in any one of the first to the seventeenth embodiments, wherein the vacuum sealing step is carried out for 5-30 seconds.

According to the nineteenth embodiment, there is provided the method for manufacturing a gel polymer electrolyte secondary battery as defined in any one of the first to the eighteenth embodiments, which further includes a step of carrying out degassing of the battery under a pressure of less than -95 kPa, after step (S4).

According to the twentieth embodiment, there is provided the method for manufacturing a gel polymer electrolyte secondary battery as defined in any one of the first to the nineteenth embodiments, wherein the degassing is carried out under a pressure of - 100 kPa to -120 kPa.

According to the twenty-first embodiment, there is provided a gel polymer electrolyte secondary battery obtained by the method as defined in any one of the first to the twentieth embodiments and having a stiffness of 4.0 MPa or more.

## Advantageous Effects

The method for manufacturing a gel polymer electrolyte secondary battery according to an embodiment of the present disclosure is characterized by including the steps of: laminating a separator and electrodes by applying a binder polymer onto one surface of the separator or electrodes in a patterned shape, folding the separator in a zigzag manner, inserting the electrodes to regions where the separator is overlapped to provide an electrode assembly; injecting a composition for a gel polymer electrolyte to the electrode assembly to obtain a battery; and carrying out formation of the battery under the conditions of a high temperature and high pressure.

In this manner, it is possible to provide a sufficient level of adhesion between the separator and the electrodes. In addition, it is possible to discharge the gases generated in the secondary battery with ease and to carry out further gelling of the gel polymer. Therefore, it is possible to improve the resistance and life characteristics of a gel polymer electrolyte secondary battery and to improve the mechanical properties of the battery.

In addition, the method for manufacturing a gel polymer electrolyte secondary battery according to an embodiment of the present disclosure uses a composition for a gel polymer electrolyte including a specific polymerization initiator to reduce the time required for wetting with the electrolyte, while allowing sufficient wetting with the electrolyte, thereby inhibiting pre-gelation.

In addition, the method for manufacturing a gel polymer electrolyte secondary battery according to an embodiment of the present disclosure may further include a step of storing the battery after the formation under the conditions of a high temperature and high pressure to further improve the above-described effects of the present disclosure.

Further, the method for manufacturing a gel polymer electrolyte secondary battery according to an embodiment

of the present disclosure may further include a step of carrying out sealing and degassing of the battery under the condition of a pressure of less than -95 kPa to improve the above-described effects of the present disclosure. Particularly, a higher level of vacuum may be applied in the sealing and degassing step so that the mechanical properties of the battery may be improved.

## DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.

FIG. 1 is a flow chart illustrating the method for manufacturing a secondary battery according to an embodiment of the present disclosure in order.
FIG. 2 is a schematic view illustrating the step of manufacturing an electrode assembly according to an embodiment of the present disclosure, wherein each of the steps is shown in order in FIG. 2a to FIG. 2f.
FIG. 3 is an image illustrating the trace of a binder applied in a dot pattern, as determined by disintegrating the battery obtained according to Example A-1 of the present disclosure.
FIG. 4 is an exploded image of the battery obtained according to Comparative Example A-3 of the present disclosure.

## BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.
Throughout the specification, the expression 'a part includes or comprises an element' does not preclude the presence of any additional elements but means that the part may further include the other elements, unless otherwise stated.
As used herein, the terms 'about', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.
As used herein, the expression 'A and/or B' means 'A, B or both of them'.
In general, a method for manufacturing a secondary battery essentially includes a formation step of carrying out charge/discharge. In the formation step, gases are generated in the secondary battery, thereby affecting the performance of the secondary battery. Therefore, it is an important technical problem to remove the gases in the secondary battery in order to improve the performance of the secondary battery.
Meanwhile, a secondary battery using a gel electrolyte shows improved safety and physical strength as compared to a secondary battery using a liquid electrolyte. However, since the inner part of the secondary battery using a gel electrolyte is already present in a gel state in the formation step, there is a problem in that the gases present in the inner part cannot be discharged with ease.
Under these circumstances, the inventors of the present disclosure have conducted intensive studies to provide a method for manufacturing a secondary battery using a gel polymer electrolyte in order to improve the performance of the secondary battery by efficiently removing the gases generated in the secondary battery.

### Method For Manufacturing Gel Polymer Electrolyte Secondary Battery

In one aspect of the present disclosure, there is provided a method for manufacturing a gel polymer electrolyte secondary battery, including the steps of:

(S1) preparing a ceramic coated separator and electrodes, wherein the ceramic coated separator includes a porous substrate and a ceramic coating layer, and the ceramic coating layer includes a first binder polymer and ceramic particles;

(S2) carrying out lamination of the separator and electrodes to provide an electrode assembly, wherein a composition including a second binder polymer is applied onto at least one surface of the separator or electrodes in a patterned shape, and the separator is folded in a zigzag manner so that the electrodes may be inserted to regions where the separator is overlapped;
(S3) injecting a composition for a gel polymer electrolyte to the electrode assembly to obtain a battery; and
(S4) carrying out formation by charging the battery at least twice under the conditions of a temperature of 50°C or higher and a pressure of 0.1-5 $kgf/cm^2$.

Hereinafter, each step will be explained in more detail.
First, a ceramic coated separator and electrodes are prepared (S1). According to the present disclosure, the ceramic coated separator is provided with a porous substrate and a ceramic coating layer, wherein the ceramic coating layer includes a first binder polymer and ceramic particles.

**Ceramic Coated Separator**

According to the present disclosure, the ceramic coated separator is provided with a porous substrate and a ceramic coating layer. The ceramic coated separator is inserted between a negative electrode and a positive electrode to insulate both electrodes physically and electrically from each other, thereby interrupting an internal short-circuit, provides an ion migration channel, and allows wetting with an electrolyte.
The porous substrate is not particularly limited, as long as it has a structure including pores. For example, the porous substrate may include a porous polymer film made of a polyolefin-based polymer, such as ethylene homopolymer, propylene homopolymer, ethylene/butene copolymer, ethylene/hexene copolymer or ethylene/methacrylate copolymer, or a laminated structure including two or more of them. The porous substrate may also include a porous nonwoven web, such as a nonwoven web made of high-melting point glass fibers, polyethylene terephthalate fibers, or the like.
The ceramic coating layer may be disposed on at least one surface or both surfaces of the porous substrate, and includes a binder polymer and ceramic particles. The separator provided with the ceramic coating layer has excellent electrical insulation property to inhibit a short-circuit. In addition, even if a short-circuit occurs, enlargement of a short-circuit portion is inhibited to contribute to improvement of the safety of a battery.
The ceramic coating layer is an organic/inorganic composite layer including ceramic particles and a binder resin, wherein the organic/inorganic composite layer has porous property by virtue of the pores formed by the interstitial volumes among the ceramic particles. Herein, the interstitial volume refers to a space defined by the ceramic particles substantially in contact with one another in a packed structure of the ceramic particles.
The ceramic particles allow forming vacant spaces among the ceramic particles, and thus function to form micropores and also function as a spacer capable of retaining the physical shape. In general, the ceramic particles do not undergo a change in physical properties in nature even at a high temperature of 200°C or higher, and thus have excellent heat resistance. The ceramic particles are not particularly limited, as long as they are electrochemically stable. In other words, there is no particular limitation in the ceramic particles, as long as they cause no oxidation and/or reduction in the range (e.g. 0-5V based on $Li/Li^+$) of operating voltage of an applicable electrochemical device. Particular examples of the ceramic particles may include $Al_2O_3$, AlOOH, $Al(OH)_3$, AlN, BN, MgO, $Mg(OH)_2$, $SiO_2$, ZnO, $TiO_2$, $BaTiO_3$, or a mixture thereof.
According to the present disclosure, the first binder polymer is not particularly limited, as long as it can provide binding force among the ceramic particles and binding force between the porous coating layer and the electrode.
Particularly, the first binder polymer may include one that is not dissolved in an organic solvent and can retain dispersibility. In addition, the first binder polymer may include a particle-type binder polymer which is not dissolved in an organic solvent and retains dispersibility, while maintaining a particle-like shape.
For example, the first binder polymer may include an acrylate-based binder polymer. The acrylate-based binder polymer may include polyacrylonitrile, acrylonitrile-styrenebutadiene copolymer and polybutyl acrylate, homopolymer or copolymer of an acrylate monomer, such as methyl (meth)acrylate, ethyl (meth)acrylate, n-propyl (meth)acrylate, butyl acrylate, isononyl acrylate or 2-ethylhexyl acrylate, or a mixture thereof. According to the present disclosure, when the acrylate-based binder polymer is used as the first binder polymer, water may be used as a solvent to simplify the manufacturing process, and the thickness of the porous coating layer may be reduced advantageously.
The content of the first binder polymer may be 0.1-10 wt% based on the total weight of the ceramic coating layer. Particularly, the content of the first binder polymer may be 0.1 wt% or more, 1 wt% or more, 3 wt or more, 10 wt% or less, or 8 wt% or less, based on the total weight of the ceramic coating layer.
In general, when the binder polymer is used in the above-defined range, a sufficient level of adhesion may not be ensured upon the adhesion with an electrode, and the problems including detachment of the separator may occur during the assemblage of an electrode assembly. However, according to the method for manufacturing a gel polymer electrolyte secondary battery of the present disclosure, the content of the first binder polymer satisfies the above-defined

range, while solving the above-mentioned problems. Therefore, it is possible to reduce the resistance of the separator, to increase the energy density of the battery and to save the cost.

**Electrode**

According to the present disclosure, the electrode is a positive electrode and/or a negative electrode, and any electrode that may be used conventionally for manufacturing a lithium secondary battery may be used. According to the present disclosure, the electrode may be obtained by allowing an electrode active material to be bound with an electrode current collector according to a conventional method known to those skilled in the art.

Among the electrode active materials, non-limiting examples of the positive electrode active material may include a conventional positive electrode active material that may be used conventionally for a positive electrode of a lithium secondary battery, and particular examples thereof may include at least one selected from lithium manganese oxides, lithium cobalt oxides, lithium nickel oxides, lithium iron oxides or lithium composite oxides prepared through a combination thereof.

Non-limiting examples of the negative electrode active material may include a conventional negative electrode active material that may be used conventionally for a negative electrode of a lithium secondary battery. For example, the negative electrode active material may include at least one selected from materials capable of lithium intercalation/deintercalation, such as lithium metal or lithium alloy, silicon and/or silicon-based compounds, tin and/or tin-based compounds, carbon, petroleum cokes, activated carbons, graphite or other carbonaceous materials.

Non-limiting examples of the negative electrode current collector may include foil made of copper, gold, nickel or copper alloy, or a combination thereof, and non-limiting examples of the positive electrode current collector may include foil made of aluminum, nickel or a combination thereof.

Next, the separator and electrodes are laminated to form an electrode assembly (S2). In step (S2) of forming an electrode assembly according to the present disclosure, a composition including a second binder polymer is applied onto at least one surface of the separator and/or electrodes in a patterned shape. In addition, the separator is folded in a zigzag manner, and the electrodes are inserted to regions where the separator is overlapped.

According to the present disclosure, it is possible to improve the problem of detachment of the separator and electrode from each other during the step of assembling and conveying the electrode assembly, or folding of the separator, through step (S2) of forming the electrode assembly.

In general, when forming an electrode assembly, lamination is carried out under the condition of a high temperature and/or high pressure in order to adhere the separator to the electrodes. Particularly, lamination is carried out at a temperature of about 50-150°C under a pressure of about 5 $kgf/cm^2$ or more.

However, according to the present disclosure, the composition including a second binder polymer is applied onto one surface of the separator or electrodes in a patterned shape, and the electrodes are disposed between the zigzag folded separator to laminate the separator and electrodes. In this manner, even though such a conventional high temperature and/or high pressure condition for lamination is not applied, it is possible to solve the problem of detachment of the separator and electrode from each other during the step of assembling and conveying the electrode assembly, or folding of the separator.

For example, according to an embodiment of the present disclosure, the lamination in step (S2) may be carried out at a temperature of 30°C or lower. In addition, the lamination in step (S2) may be carried out under the ambient pressure or under the condition of a pressure of 3 $kgf/cm^2$ or less applied to the electrode assembly. In a variant, in step (S2), the lamination step is not carried out under a pressurized condition. In other words, according to an embodiment of the present disclosure, step (S2) may be carried out in the absence of pressure.

The electrode assembly according to the present disclosure shows a significantly low interfacial resistance between the separator and the electrode by carrying out the lamination of step (S2) under the above-described condition, thereby providing the battery with reduced resistance.

The second binder polymer is not particularly limited, as long as it can be dissolved in the composition for a gel polymer electrolyte. Particularly, according to the present disclosure, the second binder polymer may be one that can be dissolved in the composition for an electrolyte after injecting the composition for an electrolyte, and thus can reduce the interfacial resistance between the separator and the electrode. The second binder polymer is applied onto at least one surface of the separator or electrodes and functions to bind the electrodes and separator with each other, while improving the problem of detachment of the separator and electrodes from each other, or folding of the separator.

For example, the second binder polymer may include an acrylate-based binder polymer, or the like. When the acrylate-based polymer is used according to the present disclosure, it can be dissolved in the composition for an electrolyte with ease after injecting the composition for an electrolyte.

Particularly, the acrylate-based polymer may include a copolymer containing: (A) 60.1-79.9 wt% of an alkyl (meth)acrylate-based repeating unit; and (B) 20.1-39.9 wt% of a (meth)acrylate repeating unit having a terminal hydroxyl group.

More particularly, in the acrylate-based polymer, repeating unit (A) may be represented by the following Chemical Formula 1, and repeating unit (B) may be represented by the following Chemical Formula 2.

[Chemical Formula 1]

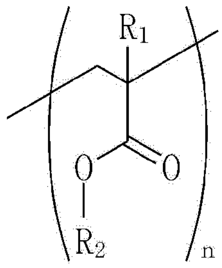

wherein $R_1$ represents H or a methyl group; $R_2$ represents a C1-C12 linear or branched alkyl group; and n represents the repetition number of repeating unit (A) and is an integer of 450-850.

[Chemical Formula 2]

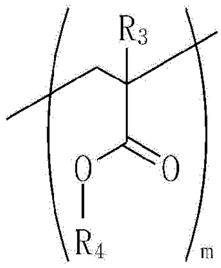

wherein $R_3$ represents H or a methyl group; $R_4$ represents a C1-C9 linear or branched alkyl group to which a hydroxyl group is bound; and m represents the repetition number of repeating unit (B) and is an integer of 200-350.

More particularly, the acrylate-based polymer may include at least one selected from the group consisting of methyl acrylate (MMA), 2-ethylhexyl acrylate (2-EHA) and 2-hydroxyethyl acrylate (2-HEA), even more particularly a combination of the three compounds.

It is possible to impart adhesion to a region where a pattern is formed by applying the composition including the second binder polymer onto one surface of the separator or electrodes in a patterned shape.

The patterned shape may include a dot pattern, a stripe pattern, a grid pattern, or the like. Particularly, the patterned shape has a dot pattern. Herein, the dot may have a diameter of about 0.3-1.0 mm. According to an embodiment of the present disclosure, about 30 dots having a diameter of about 0.5 mm may be marked on an electrode having a size of 30 cm × 10 cm. Three dots may be marked in the longitudinal direction of a length of 30 cm at an interval of about 10 cm, and ten dots may be marked in the width direction of a length of 10 cm at an interval of about 0.35 mm. Herein, the interval and number of dots may be applied freely by those skilled in the art, and the pattern may be modified depending on the size of a battery.

According to an embodiment of the present disclosure, the pattern may cover 0.0001-0.05% based on 100% of the area of the separator or electrode. When satisfying the above-defined range, the second binder may be dissolved in such a manner that it may not adversely affect the performance of the battery after injecting a composition for an electrolyte subsequently, while imparting adhesion to the region where a pattern is formed.

In step (S2), the separator is folded in a zigzag manner, and the electrodes are inserted to regions where the separator is overlapped. In this manner, the separator and electrodes are laminated.

FIG. 2 is a schematic view illustrating the method for laminating the separator and electrodes according to the present disclosure.

For example, the method for laminating the separator and electrodes will be explained based on FIG. 2a to FIG. 2f of FIG. 2. First, a separator 21 is supplied onto a stack table 1 through a separator supplying unit 2 wound in a roll-like shape. The stack table may be moved in the transverse direction, and the separator may be folded in a zigzag manner. In addition, a first electrode 31 and/or a second electrode 32 may be laminated in order in the region where the

separator is folded in a zigzag manner. Further, a composition 41 including a binder polymer may be applied onto one surface of the separator or electrode from a binder applying unit 4 in a patterned shape.

For example, as shown in FIG. 2a, the first electrode is laminated onto a stack table to which a separator is supplied. As shown in FIG. 2b and FIG. 2c, the stack table is moved so that the separator may be folded in a zigzag manner, and a composition including a binder polymer is applied onto one surface of the separator in a patterned shape. Referring to FIG. 2d and FIG. 2e, the second electrode is conveyed and laminated onto the separator. Referring to FIG. 2f, an electrode assembly including the laminate in which the first electrode and the second electrode are inserted to the regions where the separator is overlapped through the zigzag folding is disposed on the stack table, the stack table is moved so that the separator may be folded in a zigzag manner, and the composition including the binder polymer is applied onto one surface of the separator in a patterned shape.

In other words, the electrode assembly obtained according to the present disclosure includes the first electrode and the second electrode with the separator interposed therebetween, wherein the first electrode is disposed on one surface of the separator and the second electrode is disposed on the other surface of the separator.

Then, a composition for a gel polymer electrolyte is injected to the electrode assembly to obtain a battery (S3).

In the method for manufacturing a lithium secondary battery according to an embodiment of the present disclosure, the composition for a gel polymer electrolyte may be one used conventionally for preparing a gel polymer electrolyte. Particularly, the composition for a gel polymer electrolyte may include a polymerization initiator, a polymerizable compound, a lithium salt and a nonaqueous organic solvent.

In step (S3), the composition for a gel polymer electrolyte may be polymerized to form a gel polymer electrolyte, after injecting the composition for a gel polymer electrolyte. For example, the polymerization may be carried out at a temperature of 40-80°C so that the polymerizable compound contained in the composition for a gel polymer electrolyte may be subjected to polymerization or crosslinking to form a gel polymer electrolyte.

**Polymerization Initiator**

The composition for a gel polymer electrolyte according to the present disclosure may include a polymerization initiator in order to carry out the reaction required for preparing a gel polymer electrolyte.

The polymerization initiator may include a conventional thermal polymerization initiator or photopolymerization initiator known to those skilled in the art. For example, the polymerization initiator may be decomposed by heat to form radicals and react with the crosslinking agent through free radical polymerization to form a gel polymer electrolyte.

More particularly, non-limiting examples of the polymerization initiator may include, but are not limited to: organic peroxides, such as benzoyl peroxide, acetyl peroxide, dilauryl peroxide, di-tert-butylperoxide, t-butyl peroxy-2-ethylhexanoate, cumyl hydroperoxide and hydrogen peroxide; hydroperoxides; or azo compounds, such as 2,2'-azobis(2-cyanobutane), 2,2'-azobis(methylbutyronitrile), 2,2'-azobis(iso-butyronitrile) (AIBN), 2,2'-azobisdimethyl valeronitrile (AMVN) and 2,2'-azobis-methoxy-dimethylvaleronitrile (AMVN), or the like.

Meanwhile, according to an embodiment of the present disclosure, the composition for a gel polymer electrolyte includes a polymerization initiator having a 10 hour half-life temperature of 60°C or lower, or a 10 hour half-life temperature of 55°C or lower.

When the composition for a gel polymer electrolyte includes a polymerization initiator having a 10 hour half-life temperature of 60°C or lower, it is possible to ensure the properties of the gel polymer electrolyte by increasing the polymer conversion ratio, and to improve the wettability of an electrode with the electrolyte by preventing pre-gelation.

As used herein, '10 hour half-life temperature' refers to a temperature at which a half of the original initiator is decomposed within 10 hours.

Particularly, since the method for manufacturing a gel polymer electrolyte secondary battery according to the present disclosure includes no step of applying a pressure exceeding the ambient pressure during the manufacture of an electrode assembly, particularly, before carrying out the formation step, the electrodes and the separator are not closely adhered to each other. Therefore, an electrolyte migration channel is formed well after injecting the composition for a gel polymer electrolyte, and thus wetting with the electrolyte may be accomplished more rapidly.

In addition, according to the present disclosure, since the content of the binder contained in the ceramic coated separator is reduced and the time required for swelling of the binder is reduced, it is possible to reduce the overall time of wetting with the electrolyte.

In other words, since the method for manufacturing a gel polymer electrolyte secondary battery according to the present disclosure can reduce the time required for wetting with the electrolyte, a polymerization initiator having a 10 hour half-life temperature of 60°C or lower is used as a highly reactive polymerization initiator (i.e. polymerization initiator having excellent reaction initiating performance) to provide a secondary battery having excellent physical properties.

For example, according to the present disclosure, a polymerization initiator having a 10 hour half-life temperature of 60°C or lower among the above-exemplified azo compounds may be selected and used as a polymerization initiator.

Particularly, at least one selected from 2,2'-azobis-2,4-dimethyl valeronitrile (V65 available from Wako) and 2,2'-azobis-4-methoxy-2,4-dimethylvaleronitrile (V70 available from Wako) may be used. Particularly, 2,2'-azobis-2,4-dimethyl valeronitrile has a 10 hour half-life temperature of 51°C, and 2,2'-azobis-4-methoxy-2,4-dimethylvaleronitrile has a 10 hour half-life temperature of 30°C.

The polymerization initiator may be decomposed by heating, for example, heating at 30-100°C, or may be decomposed at room temperature (5-30°C) to form radicals, and may react with a polymerizable compound through free radical polymerization to form a gel polymer electrolyte.

The polymerization initiator may be used in an amount of 0.01-20 parts by weight, particularly 0.1-10 parts by weight, based on 100 parts by weight of a polymerizable compound.

When the polymerization initiator is used in a range of 0.01-20 parts by weight, it is possible to ensure the properties of the gel polymer electrolyte by increasing the polymer conversion ratio, and to improve the wettability of an electrode with the electrolyte by preventing pre-gelation.

**Polymerizable Compound**

The polymerizable compound is a compound which has a polymerizable functional group selected from the group consisting of vinyl, epoxy, allyl and (meth)acryl groups and capable of undergoing polymerization in its structure, and can be converted into a gel phase through polymerization or crosslinking. The polymerizable compound is not particularly limited, as long as it is used conventionally as a polymerizable monomer, oligomer or copolymer for preparing a gel polymer electrolyte.

Particularly, non-limiting examples of the polymerizable monomer may include, but are not limited to: tetraethylene glycoldiacrylate, polyethylene glycol diacrylate (molecular weight 50-20,000), 1,4-butanediol diacrylate, 1,6-hexandiol diacrylate, trimethylolpropane triacrylate, trimethylolpropane ethoxylate triacrylate, trimethylolpropane propoxylate triacrylate, di(trimethylolpropane) tetraacrylate, pentaerythritol tetraacrylate, pentaerythritol ethoxylate tetraacrylate, dipentaerythritol pentaacrylate, dipentaerythritol hexaacrylate, poly(ethylene glycol) diglycidylether, 1,5-hexadiene diepoxide, glycerol propoxylate triglycidyl ether, vinylcyclohexene dioxide, 1,2,7,8-diepoxyoctane, 4-vinylcyclohexene dioxide, butyl glycidyl ether, diglycidyl 1,2-cyclohexanedicarboxylate, ethylene glycol diglycidyl ether, glycerol triglycidyl ether, glycidyl methacrylate, or the like. Such compounds may be used alone or in combination.

In addition, typical examples of the copolymer may include at least one selected from the group consisting of allyl 1,1,2,2-tetrafluoroethyl ether (TFE)-co-(2,2,2-trifluoroethyl acrylate), TFE-co-vinyl acetate, TFE-co-(2-vinyl-1,3-dioxolane), TFE-co-vinyl methacrylate, TFE-co-acrylonitrile, TFE-co-vinyl acrylate, TFE-co-methyl acrylate, TFE-co-methyl methacrylate (MMA) and TFE-co-2,2,2-trifluoroethyl acrylate (FA).

The polymerizable compound may be used in an amount of 0.01-10 wt% based on the total weight of the composition for a gel polymer electrolyte. When the content of the polymerizable compound is larger than 10 wt%, gelling may occur in an excessively early time, while injecting the composition for a gel polymer electrolyte to a battery, or the composition may become excessively dense to provide a gel having high resistance. On the contrary, when the content of the polymerizable compound is smaller than 0.01 wt%, gelling occurs hardly.

**Lithium Salt**

The lithium salt is used as an electrolyte salt in the lithium secondary battery and as a medium for transporting ions. In general, the lithium salt includes $Li^+$, as a cation, and at least one selected from the group consisting of $F^-$, $Cl^-$, $Br^-$, $I^-$, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $B_{10}Cl_{10}^-$, $BF_2C_2O_4^-$, $BC_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $CF_3(CF_2)_7SO_3^-$, $CF_3CO_2^-$, $CH_3CO_2^-$, $SCN^-$ and $(CF_3CF_2SO_2)_2N^-$, as an anion.

Such lithium salts may be used alone or in combination. The lithium salt may be used in an amount controlled suitably within a generally applicable range. However, the lithium salt may be used at a concentration of 0.5-2M, particularly 0.9-1.5M, in the electrolyte in order to obtain an optimized effect of forming a coating film for preventing corrosion on the electrode surface.

Since the composition for a gel polymer electrolyte according to the present disclosure includes an electrolyte salt at 0.5M or more, it is possible to reduce the resistance caused by depletion of lithium ions during high-rate charge/discharge. Furthermore, when the concentration of the electrolyte salt in the composition for a gel polymer electrolyte according to the present disclosure satisfies the above-defined range, it is possible to ensure high lithium cation ($Li^+$) ion transportability (i.e. cation transference number) by virtue of an increase in lithium cations present in the composition for a gel polymer electrolyte, and to accomplish an effect of reducing diffusion resistance of lithium ions, thereby realizing an effect of improving cycle capacity characteristics.

## Non-Aqueous Organic Solvent

The non-aqueous organic solvent is not particularly limited, as long as it causes minimized decomposition caused by oxidation during the charge/discharge cycles of a secondary battery and can realize desired properties in combination with additives. For example, carbonate-based organic solvents, ether-based organic solvents and ester-based organic solvents may be used alone or in combination.

Among such organic solvent, the carbonate-based organic solvent may include at least one of cyclic carbonate-based organic solvents and linear carbonate-based organic solvents. Particular examples of the cyclic carbonate-based organic solvent may include at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate and fluoroethylene carbonate (FEC). Particularly, the cyclic carbonate-based organic solvent may include a mixed solvent of ethylene carbonate having a high dielectric constant with propylene carbonate having a relatively lower melting point as compared to ethylene carbonate.

In addition, the linear carbonate-based organic solvent is an organic solvent having low viscosity and a low dielectric constant, and typical examples thereof may include at least one organic solvent selected from the group consisting of dimethyl carbonate (DMC), diethyl carbonate (DEC), dipropyl carbonate, ethyl methyl carbonate (EMC), methyl propyl carbonate and ethyl propyl carbonate. Particularly, the linear carbonate-based organic solvent may include dimethyl carbonate.

The ether-based organic solvent may include any one selected from the group consisting of dimethyl ether, diethyl ether, dipropyl ether, methyl ethyl ether, methyl propyl ether and ethyl propyl ether, or a mixture of two or more of them. However, the scope of the present disclosure is not limited thereto.

The ester-based organic solvent may include at least one selected from the group consisting of linear ester-based organic solvents and cyclic ester-based organic solvents.

Particular examples of the linear ester-based organic solvent may include any one organic solvent selected from the group consisting of methyl acetate, ethyl acetate, propyl acetate, methyl propionate, ethyl propionate, propyl propionate and butyl propionate, or a mixture of two or more of them. However, the scope of the present disclosure is not limited thereto.

Particular examples of the cyclic ester-based organic solvent may include any one organic solvent selected from the group consisting of $\gamma$-butyrolactone, $\gamma$-valerolactone, $\gamma$-caprolactone, $\sigma$-valerolactone and $\varepsilon$-caprolactone, or a mixture of two or more of them. However, the scope of the present disclosure is not limited thereto.

Among such organic solvents, the cyclic carbonate-based compound is a high-viscosity organic solvent and can dissociate the lithium salt in the electrolyte well, and thus may be used preferably. When using such a cyclic carbonate-based compound in the form of a mixture with a low-viscosity and low-dielectric linear carbonate-based compound and linear ester-based compound at a suitable mixing ratio, it is possible to prepare a gel polymer electrolyte having high electrical conductivity preferably.

## Additives

The composition for a gel polymer electrolyte according to the present disclosure may further include supplementary additives capable of forming a more stable ion conductive coating film on the surface of an electrode, if necessary, in order to prevent decomposition of the non-aqueous electrolyte and a collapse of the negative electrode under a high-output environment, or to improve low-temperature high-rate discharge characteristics, high-temperature stability, overcharge-preventing effect, battery swelling-inhibiting effect at high temperature, or the like.

Particularly, typical examples of such supplementary additives may include at least one first additive selected from the group consisting of sultone-based compounds, sulfite-based compounds, sulfone-based compounds, sulfate-based compounds, halogen-substituted carbonate-based compounds, nitrile-based compounds, cyclic carbonate-based compounds, phosphate-based compounds, borate-based compounds and lithium salt-based compounds.

The sultone-based compounds may include at least one compound selected from the group consisting of 1,3-propane sultone (PS), 1,4-butane sultone, ethene sultone, 1,3-propene sultone (PRS), 1,4-butene sultone and 1-methyl-1,3-propene sultone, and may be used in an amount of 0.3-5 wt%, particularly 1-5 wt%, based on the total weight of the composition for a gel polymer electrolyte. When the content of the sultone-based compounds is larger than 5 wt% in the composition for a gel polymer electrolyte, an excessively thick coating film may be formed on the surface of an electrode, resulting in an increase in resistance and degradation of output. Also, in this case, resistance may be increased due to such an excessive amount of additives in the composition for a gel polymer electrolyte to cause degradation of output characteristics.

The sulfite-based compounds may include at least one compound selected from the group consisting of ethylene sulfite, methyl ethylene sulfite, ethyl ethylene sulfite, 4,5-dimethyl ethylene sulfite, 4,5-diethyl ethylene sulfite, propylene sulfite, 4,5-dimethyl propylene sulfite, 4,5-diethyl propylene sulfite, 4,6-dimetyl propylene sulfite, 4,6-diethyl propylene

sulfite and 1,3-butylene glycol sulfite, and may be used in an amount of 3 wt% or less, based on the total weight of the composition for a gel polymer electrolyte.

The sulfone-based compounds may include at least one compound selected from the group consisting of divinyl sulfone, dimethyl sulfone, diethyl sulfone, methyl ethyl sulfone and methyl vinyl sulfone, and may be used in an amount of 3 wt% or less, based on the total weight of the composition for a gel polymer electrolyte.

The sulfate-based compounds may include ethylene sulfate (Esa), trimethylene sulfate (TMS), or methyl trimethylene sulfate (MTMS), and may be used in an amount of 3 wt% or less, based on the total weight of the composition for a gel polymer electrolyte.

In addition, the halogen-substituted carbonate-based compounds may include fluoroethylene carbonate (FEC), and may be used in an amount of 5 wt% or less, based on the total weight of the composition for a gel polymer electrolyte. When the content of the halogen-substituted carbonate-based compounds is larger than 5 wt%, cell swelling quality may be degraded.

Further, the nitrile-based compounds may include at least one compound selected from the group consisting of succinonitrile, adiponitrile (Adn), acetonitrile, propionitrile, butyronitrile, veleronitrile, caprylonitrile, heptane nitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile and 4-fluorophenylacetonitrile.

The cyclic carbonate-based compounds may include vinylene carbonate (VC) or vinylethylene carbonate, and may be used in an amount of 3 wt% or less, based on the total weight of the composition for a gel polymer electrolyte. When the content of the cyclic carbonate-based compounds is larger than 3 wt%, cell swelling-inhibiting performance may be degraded.

The phosphate-based compounds may include at least one compound selected from the group consisting of lithium difluoro(bisoxalato)phosphate, lithium difluorophosphate ($LiPO_2F_2$), tetramethyl trimethylsilyl phosphate, trimethylsilyl phosphite, tris(2,2,2-trifluoroethyl) phosphate and tris(trifluoroethyl) phosphite, and may be used in an amount of 3 wt% or less, based on the total weight of the composition for a gel polymer electrolyte.

The borate-based compounds may include lithium oxalyl difluoroborate, and may be used in an amount of 3 wt% or less, based on the total weight of the composition for a gel polymer electrolyte.

The lithium salt-based compounds may include compounds different from the lithium salt contained in the non-aqueous electrolyte, and particularly, at least one compound selected from the group consisting of $LiPO_2F_2$, LiODFB, LiBOB (lithium bisoxalatoborate ($LiB(C_2O_4)_2$) and $LiBF_4$, and may be used in an amount of 3 wt% or less, based on the total weight of the composition for a gel polymer electrolyte.

Further, two or more of the supplementary additives may be used in combination, and the content of the supplementary additives may be 20 wt% or less, particularly 0.1-10 wt%, based on the total weight of the composition for a gel polymer electrolyte. When the content of the supplementary additives is smaller than 0.01 wt%, it is not possible to obtain sufficient effects of improving the low-temperature output, high-temperature storage characteristics and high-temperature life characteristics of a battery. When the content of the supplementary additives is larger than 20 wt%, excessive side reactions may occur in the composition for a gel polymer electrolyte during the charge/discharge of a battery due to an excessive amount of additives. Particularly, when the additives are added in an excessive amount, they cannot be decomposed sufficiently at high temperature and may remain as unreacted materials or precipitate in the electrolyte at room temperature. In this case, side-reactions may occur to cause degradation of the life or resistance characteristics of a secondary battery.

According to an embodiment of the present disclosure, the method may further include a step of vacuum sealing the battery under a pressure of less than -95 kPa, after step (S3).

After injecting the composition for a gel polymer electrolyte in step (S3), the gel polymer electrolyte is formed, and then the vacuum sealing step may be carried out under a high degree of vacuum. Particularly, the vacuum sealing step may be carried out by applying a predetermined high degree of vacuum to the battery provided with a battery casing including the electrode assembly obtained from step (S2) and the composition for a gel polymer electrolyte injected thereto.

In the case of a battery to which a liquid electrolyte is injected, application of a high degree of vacuum causes evaporation of the electrolyte, resulting in the problems of deterioration of the long-term cycle characteristics and degradation of the life of the battery. Therefore, when injecting a liquid electrolyte, a pressure of -95 kPa or higher should be applied in the sealing step.

However, according to the present disclosure, since the sealing step may be carried out under a relatively higher level of vacuum as compared to the related art, it is possible to further improve the stiffness and life of the battery by virtue of lower volatility of the gel polymer electrolyte as compared to the liquid electrolyte and improved adhesion between the battery casing and the electrode assembly.

Particularly, the battery obtained from step (S3) may be subjected to a vacuum sealing step under a pressure of less than -95 kPa, or a pressure of -100 kPa to -120 kPa. When the vacuum sealing is carried out under the above-defined pressure condition, it is possible to prevent infiltration of water into the composition for a gel polymer electrolyte

injected to the battery and introduction of air from the outside of the battery to the inside of the battery. It is also possible to increase the residual amount and gelling degree of the electrolyte after the vacuum sealing step, and to improve the cell stiffness and life characteristics.

The vacuum sealing step may be carried out for 5-30 seconds.

In addition, the vacuum sealed battery may be gelled through polymerization or crosslinking under a suitable condition of temperature and time to form a gel polymer electrolyte.

For example, the gelling may be carried out at a temperature of about 50-100°C, or about 60-80°C. In addition, the gelling may be carried out at the above-defined range of temperature for 0.5-48 hours, or 0.5-24 hours. In this manner, the polymerizable compound present in the composition for a gel polymer electrolyte is polymerized or crosslinked to form a gel polymer electrolyte.

Then, formation of the battery is carried out by charging the battery at least twice under the conditions of a temperature of 50°C or higher and a pressure of 0.1-5 $kgf/cm^2$(S4).

The pressure application in step (S4) may include applying pressure at least once by using a pressurizing device. The pressurizing device is not particularly limited, as long as it can apply a suitable level of pressure to the battery. For example, the pressurizing device may be a jig. Particularly, the pressure application may be carried out by inserting the battery between a pair of jigs facing each other and carrying out pressurization. For example, to apply the pressure, the pressurizing device may pressurize the battery under a pressure of 0.1-5 $kgf/cm^2$. In addition, the pressurization may be carried out for 1 minutes to 10 hours, or 1-5 hours.

Formation of a battery is a step of initially charging the battery in order to activate the electrode active material and to form a solid electrolyte interphase (SEI) layer on the electrode surface. In the case of the gel polymer electrolyte secondary battery according to the present disclosure, such formation may be carried out by applying electric current to the electrode assembly wetted with the composition for a gel polymer electrolyte to a predetermined level of voltage. In the battery formation step, gases are generated inevitably in the battery through the decomposition of the electrolyte, or the like. However, according to the present disclosure, formation of the battery is carried out under a predetermined high temperature and high pressure condition, and thus the gases generated in the battery may be removed. Particularly, in the case of a secondary battery using a gel polymer electrolyte, the electrolyte is present already in a gel state in the formation step, and thus the gases cannot be removed by applying high pressure. However, since the method for manufacturing a secondary battery according to the present disclosure includes no step of applying a pressure exceeding the ambient pressure to the electrode assembly before carrying out the formation step, the electrode is not closely adhered to the separator, and the gases may be discharged rapidly by the high pressure applied in the formation step.

Particularly, step (S4) may include the steps of: (S4a) carrying out primary charge at a temperature of 50-60°C under a pressure of 0.1-1 $kgf/cm^2$ to 20% or less of the capacity (state of charge, SOC) of the secondary battery; and (S4b) carrying out secondary charge at a temperature of 50-60°C under a pressure of 3-5 $kgf/cm^2$ to 15~60% or less of the capacity (state of charge, SOC) of the secondary battery.

When the charging step in the formation step is divided into multiple steps having a predetermined condition, it is possible to allow uniform charging through the initial low-rate charging to form a uniform SEI layer in step (S4a), thereby inducing generation of a large amount of gases. In addition, in step (S4b), a higher rate is applied to reduce the time, and the pressure is increased to facilitate removal of the gases to the outside.

According to an embodiment of the present disclosure, the method may further include step (S5) of storing the battery subjected to formation in step (S4) at a temperature of 60°C or higher under a pressure of 3 $kgf/cm^2$ or more.

Step (S5) refers to a step of allowing the battery after the formation to stand under a high temperature and high pressure condition for a predetermined time. The binder present in the separator may be softened through step (S5) to improve the adhesion between the electrode and the separator, and the gases trapped in the electrodes and/or at the interface between the electrodes and the separator may be discharged effectively.

Step (S5) may be also referred to as a clamp and baking (CB) step. Hereinafter, the clamp and baking step will be explained in more detail.

According to an embodiment of the present disclosure, the gases generated in the secondary battery may be removed by storing the battery after the formation under a predetermined high temperature and high pressure condition. Particularly, in the case of a secondary battery using a gel polymer electrolyte, the electrolyte is already present in a gel state in the formation step, and thus the gases cannot be removed by applying high pressure after the formation step. However, since the method for manufacturing a secondary battery according to the present disclosure includes no step of applying a pressure exceeding the ambient pressure to the electrode assembly before carrying out the formation step, the electrodes are not closely adhered to the separator, and thus the high pressure applied in the clamp and baking step after the formation step can accelerate discharge of the gases.

Particularly, the battery after the formation may be stored at a temperature of 60°C or higher, 60-100°C, or 70-90°C. The pressure application in step (S5) may include applying pressure at least once by using a pressurizing device. The pressurizing device is not particularly limited, as long as it can apply a suitable level of pressure to the battery. For example, the pressurizing device may be a jig. Particularly, the pressure application may be carried out by

inserting the battery between a pair of jigs facing each other and carrying out pressurization. For example, to apply the pressure, the pressurizing device may pressurize the battery under a pressure of 3 $kgf/cm^2$ or more, or 3-10 $kgf/cm^2$. In addition, the pressurization may be carried out for 1 minutes to 5 hours, or 30 minutes to 1 hour. When carrying out pressurization under the above-defined condition, it is possible to remove the activation gases trapped in the electrodes and at the electrode/separator interface, thereby reducing the resistance, and to inhibit lithium deposition caused by the trapped gases and degradation of life caused thereby.

In addition, according to an embodiment of the present disclosure, the battery may be subjected to degassing under a pressure of less than -95 kPa, after step (S4).

When carrying out the degassing step, it is possible to remove the gases generated in the formation step. Particularly, in the degassing step, the battery after the formation may be subjected to degassing under a pressure of less than -95 kPa, or -100 kPa to -120 kPa.

In the case of a battery to which a liquid electrolyte is injected, application of a high degree of vacuum in the degassing step causes evaporation of the electrolyte, resulting in degradation of the long-term cycle characteristics and life of the battery. Therefore, in the case of a battery to which a liquid electrolyte is injected, a pressure of -95 kPa or higher should be applied in the degassing step.

However, according to the present disclosure, since the degassing step may be carried out under a relatively higher degree of vacuum as compared to the related art, it is possible to further improve the stiffness and life of the battery by virtue of lower volatility of the gel polymer electrolyte as compared to the liquid electrolyte and improved adhesion between the battery casing and the electrode assembly.

The degassing step may be carried out for 5-30 seconds to remove the gases remaining in the battery casing.

Meanwhile, according to an embodiment of the present disclosure, a step of wrapping the electrode assembly with a separator film is carried out, after forming the electrode assembly.

The separator film is a porous insulating film and may include a polymer material. For example, reference will be made to the description about the porous substrate of the separator about the separator film. When wrapping the electrode assembly with the separator film, no separator film may be applied to a lateral side portion from which an electrode tab is drawn. Meanwhile, the end of the separator film may be fixed by using a fixing tape or a binder material. When the electrode assembly is wrapped with the separator film as mentioned above, the structure of the electrode assembly can be retained more stably.

According to the present disclosure, the secondary battery is a lithium secondary battery preferably. Non-limiting examples of the lithium secondary battery may include a lithium metal secondary battery, a lithium-ion secondary battery, a lithium polymer secondary battery, a lithium-ion polymer secondary battery, or the like.

Meanwhile, in another aspect of the present disclosure, there is provided a gel polymer electrolyte secondary battery obtained by the method for manufacturing a gel polymer electrolyte secondary battery according to an embodiment of the present disclosure. The secondary battery may have a stiffness of 4.0 Mpa or higher. In a variant, the secondary battery may have a stiffness of 4.5 Mpa or higher.

Herein, the stiffness may be determined by using a UTM instrument. For example, a jig having a size of 3 mm $\times$ 3 mm is applied to the top of the secondary battery to pressurize the center of the secondary battery under a force of 30 gf at a rate of 10 mm/min. Herein, the maximum force (bending stress, MPa) may be determined while an extension of the cell from preload (degree of pressurization of the cell from the reference value) proceeds by 2 mm.

## MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

## Examples

## SET A

### Example A-1

(Preparation of Ceramic Coated Separator and Electrode)

First, $Al_2O_3$ as ceramic particles and a first binder polymer (mixture of TRD 202A available from JSR with AP-0821 available from APEC) were added to a solvent at a weight ratio of 96:4 to prepare a slurry for ceramic coating.

The slurry for ceramic coating was applied to both surfaces of a polyethylene porous film (thickness 9 $\mu$m,

porosity 45%), followed by drying, to provide a separator provided with ceramic coating layers. The ceramic coating layer had a thickness of about 1.5 μm on one surface.

Next, 97 wt% of $LiNi_{0.8}Co_{0.1}Mn_{0.1}O_2$ (NCM) as a positive electrode active material, 1 wt% of carbon black as a conductive material and 2 wt% of polyvinylidene fluoride (PVDF) as a binder were added to N-methyl-2-pyrrolidone (NMP) as a solvent to obtain positive electrode active material slurry. The positive electrode active material slurry was applied to and dried on aluminum (Al) foil having a thickness of about 20 μm as a positive electrode current collector, followed by roll pressing, to obtain a positive electrode.

In addition, 96 wt% of carbon powder as a negative electrode active material, 3 wt% of PVDF as a binder and 1 wt% of carbon black as a conductive material were added to NMP as a solvent to obtain a negative electrode active material slurry. The negative electrode active material slurry was applied to and dried on copper (Cu) foil having a thickness of 10 μm as a negative electrode current collector, followed by roll pressing, to obtain a negative electrode.

(Preparation of Composition for Gel Polymer Electrolyte)

First, $LiPF_6$ was dissolved in a non-aqueous organic solvent having a composition of ethylene carbonate (EC): ethyl methyl carbonate (EMC)= 30:70 (volume ratio) to 1.0M. Next, 5 parts by weight of trimethylolpropane triacrylate as a polymerizable compound and 0.06 parts by weight of azobisisobutyroitrile (AIBN) as a polymerization initiator, based on 100 wt% of the composition for a gel polymer electrolyte, were added to the non-aqueous electrolyte to prepare a composition for a gel polymer electrolyte.

(Manufacture of Electrode Assembly and Secondary Battery)

The negative electrode and the positive electrode were inserted to the portions, where the ceramic coated separator was folded in a zigzag manner and overlapped, sequentially. A composition including an acrylate-based polymer (copolymer containing a methyl methacrylate (MMA)-derived repeating unit, 2-ethylhexyl acrylate (2-EHA)-derived repeating unit and 2-hydroxyethyl acrylate (2-HEA)-derived repeating unit at a weight ratio of 40:30:30) was applied to one surface of the ceramic coated separator in a pattern of dots having a diameter of 0.5 mm. Herein, the separator had a size of 306.5 mm (width) × 104.5 mm (length), and the composition was applied to three spots at an interval of 100 mm in the transverse direction and at an interval of 0.35 mm in the longitudinal direction. The electrode assembly was manufactured under the condition of room temperature and ambient pressure.

The resultant electrode assembly was inserted into a battery casing, and the composition for a gel polymer electrolyte prepared as described above was injected thereto to obtain a secondary battery. Then, the battery casing was allowed to stand at room temperature of 2 days so that it might be wetted with the electrolyte, and the composition for a gel polymer electrolyte was allowed to stand in a chamber at 60°C for 10 hours to carry out polymerization.

(Battery Formation Step)

Formation of the secondary battery was carried out through two steps.

Primary Charge: The secondary battery was charged to 20% of the capacity thereof at a rate of 0.1C by applying a pressure of 0.1 $kgf/cm^2$ at 60°C.

Secondary Charge: The secondary battery was charged to 60% of the capacity thereof at a rate of 0.2C by applying a pressure of 5 $kgf/cm^2$ at 60°C.

Herein, the pressure application during the primary charge and the secondary charge was carried out by inserting the battery between a pair of jigs facing each other.

**Example A-2**

A battery was obtained in the same manner as Example A-1, except that a clamp and baking step of inserting the secondary battery between a pair of jigs facing each other and storing it for 30 minutes while applying a pressure of 5 $kgf/cm^2$ thereto at a temperature of 80°C, as a post-step, was further carried out after carrying out the battery formation step.

**Comparative Example A-1**

A battery was obtained in the same manner as Example A-1, the secondary battery was charged once under the following condition in the battery formation step.

Primary Charge: The secondary battery was charged to 60% of the capacity thereof at a rate of 0.2C at room temperature (25°C) in the absence of pressure.

**Comparative Example A-2**

A battery was obtained in the same manner as Example A-1, except that the secondary battery was charged once under the following condition in the battery formation step.
Primary Charge: The secondary battery was charged to 60% of the capacity thereof at a rate of 0.2C at a temperature of 60°C in the absence of pressure.

**Comparative Example A-3**

A battery was obtained in the same manner as Example A-1, except that the content of the binder polymer in the ceramic coated separator was 30 wt%, and conventional lamination was carried out at a high temperature (80°C) under a high pressure (3 $kgf/cm^2$) when the electrode assembly was assembled.

**Comparative Example A-4**

A battery was obtained in the same manner as Example A-1, except that the following battery formation step and clamp and baking step were carried out.

(Battery Formation Step)

Primary Charge: The secondary battery was charged to 60% of the capacity thereof at a rate of 0.2C at room temperature (25°C) in the absence of pressure.

(Clamp and Baking Step)

The secondary battery was inserted between a pair of jigs facing each other and stored for 30 minutes while applying a pressure of 5 $kgf/cm^2$ thereto at a temperature of 80°C.

**Test Results**

The gel polymer electrolyte secondary battery according to each of Examples and Comparative Examples of SET A was evaluated in terms of its physical properties as follows. The results are shown in the following Table 1.

[Table 1]

| SET A | Ex. A-1 | Ex. A-2 | Comp. Ex. A-1 | Comp. Ex. A-2 | Comp. Ex. A-3 | Comp. Ex. A-4 |
|---|---|---|---|---|---|---|
| Resistance (mOhm) | 2.22 | 2.10 | 2.28 | 2.53 | 2.35 | 2.21 |
| Life(%, 100cycle) | 98.9 | 98.5 | 94.3 | 87.5 | 92.7 | 96.5 |
| Stiffness (MPa) | 4.39 | 5.02 | 4.06 | 3.85 | 6.81 | 4.32 |
| Nail (Pass/Total) | 3/3 | 3/3 | 1/3 | 0/3 | 3/3 | 1/3 |

(1) Method for Determining Resistance

The secondary battery according to each of Examples and Comparative Examples of SET A was determined in terms of resistance by using a change in voltage (ΔV) measured when carrying out discharge from SOC 50% at 2. 5C rate for 10 seconds.

(2) Method for Determining Life

The secondary battery according to each of Examples and Comparative Examples of SET A was subjected to the initial charge/discharge (charged/discharged once) by using an electrochemical charger. Herein, the secondary battery was charged by applying electric current at a current density of 0.33C-rate to a voltage of 4.2V, and discharged to 2.5V at the same current density. The secondary battery was subjected to such a charge/discharge cycle 100 times.
The voltage and capacity of each of the positive electrode and negative electrode contained in each battery were determined in the above-mentioned charge/discharge cycles.
Then, the capacity retention of each battery was calculated from the determined voltage and capacity according

to the following formula.

$$\text{Capacity Retention (\%)} = (\text{Capacity at the } 100^{th} \text{ cycle/Initial capacity}) \times 100$$

(3) Method for Evaluating Stiffness

The stiffness of the secondary battery according to each of Examples and Comparative Examples of SET A was determined by using a UTM instrument. The secondary battery was pressurized at the center thereof under the condition of a force of 30 gf and a rate of 10 mm/min. by applying a jig having a size of 3 mm × 3 mm to the top of the secondary battery. Herein, the maximum force (bending stress, MPa) was determined while an extension of the cell from preload (degree of pressurization of the cell from the reference value) proceeded by 2 mm.

(4) Evaluation of Safety Based on Nail Penetration Test

The secondary battery according to each of Examples and Comparative Examples of SET A was fully charged to 4.4V at room temperature, and a nail penetration test was carried out under the condition of GB/T (nail diameter 2.5 mm, penetration speed 6 m/min). The test results are shown in the above Table 1.

When comparing the secondary batteries using a composition for a gel polymer electrolyte as an electrolyte according to Example A-1 and Comparative Examples A-1 to A-3 with one each other, it can be seen from Table 1 that degassing is accomplished more easily in the case of Example A-1 to which a high temperature and high pressure condition is applied in the battery formation step, as compared to Comparative Example A-1 in which the formation is carried out at room temperature and Comparative Example A-2 in which the formation is carried out at a high temperature in the absence of pressure application. This demonstrates that the secondary battery according to Example A-1 shows excellent resistance and life characteristics, stiffness and safety.

In addition, when comparing Example A-1 with Example A-2, in the case of Example A-2 in which the clamp and baking step is further carried out after carrying out the same battery formation step, gas discharge is accelerated by the high pressure applied during the clamp and baking step, and thus the secondary battery according to Example A-2 shows excellent battery performance.

In addition, in the case of Comparative Example A-3, the same battery formation step as Example A-1 is carried out, but a larger amount of binder is contained in the ceramic coated separator as compared to Example A-1, and thus the secondary battery according to Comparative Example A-3 shows poor resistance characteristics. Further, Comparative Example A-3 includes lamination carried out under a high temperature and high pressure condition, unlike Example A-1. Therefore, even though the same battery formation step as Example A-1 is carried out, the gases generated in the battery cannot be removed with ease, and thus the secondary battery according to Comparative Example A-3 shows poor life characteristics.

## SET B

### Example B-1

A battery was obtained in the same manner as Example A-1. The polymerization initiator used in Example A-1, AIBN (V59), has a 10 hour half-life temperature of 67°C.

### Example B-2

A battery was obtained in the same manner as Example B-1, except that 2,2'-azobis-2,4-dimethylvaleronitrile (V65) having a 10 hour half-life temperature of 51°C was used as a polymerization initiator.

### Example B-3

A battery was obtained in the same manner as Example B-1, except that a clamp and baking step of inserting the secondary battery between a pair of jigs facing each other and storing it for 30 minutes while applying a pressure of 5 $kgf/cm^2$ thereto at a temperature of 80°C, as a post-step, was further carried out after carrying out the battery formation step.

**Example B-4**

A battery was obtained in the same manner as Example B-2, except that a clamp and baking step of inserting the secondary battery between a pair of jigs facing each other and storing it for 30 minutes while applying a pressure of 5 kgf/$cm^2$ thereto at a temperature of 80°C, as a post-step, was further carried out after carrying out the battery formation step.

**Comparative Example B-1**

A battery was obtained in the same manner as Example B-1, except that the content of the binder polymer in the ceramic coated separator was 30 wt%, and conventional lamination was carried out at a high temperature (80°C) under a high pressure (3 kgf/$cm^2$) when the electrode assembly was assembled.

**Test Results**

The gel polymer electrolyte secondary battery according to each of Examples and Comparative Examples of SET B was evaluated in terms of its physical properties as follows.

In Table 2, the results of the gelling ratio of the polymer are shown. In Table 3, the results of the performance of the gel polymer secondary battery are shown. The methods for determining the physical properties in Table 3 are the same as the methods described with reference to SET A.

[Table 2]

| SET B | Ex. B-1 | Ex. B-2 | Ex. B-3 | Ex. B-4 | Comp. Ex. B-1 |
|---|---|---|---|---|---|
| Wetting completion time (hr) | 42 | 15 | 42 | 15 | 61 |
| Pre-gelation(%) upon completion of wetting | 8 | 3 | 8 | 3 | 15 |
| Polymer conversion ratio after gelling(%) | 92 | 99 | 94 | 99 | 91 |

(1) Method for Determining Wetting Completion Time

A time point where the resistance is converged was determined by using electrochemical impedance spectroscopy (EIS).

(2) Pre-Gelation (%) upon Completion of Wetting and Polymer Conversion Ratio (%) after Gelling

The pre-gelation (%) and polymer conversion ratio were calculated according to the following Mathematical Formula 1. Particularly, the polymerizable compound present in the composition for a gel polymer electrolyte was analyzed quantitatively through NMR to determine the difference in polymer before and after polymerization. Particularly, NMR was used to perform the quantitative analysis of the reactive sites of the polymer and the remaining reactive sites of the polymer. The results are shown in Table 2.

Polymer conversion ratio (%)= 100 - (Remaining reactive sites of polymer after polymerization/Reactive sites of polymer before polymerazitaion) x 100 [Mathematical Formula 1]

[Table 3]

| SET B | Ex. B-1 | Ex. B-2 | Ex. B-3 | Ex. B-4 | Comp. Ex. B-1 |
|---|---|---|---|---|---|
| Resistance (mOhm) | 2.22 | 2.11 | 2.10 | 2.02 | 2.35 |
| Life(%, 100 cycle) | 98.9 | 99.2 | 98.5 | 99.0 | 92.7 |
| Stiffness (MPa) | 4.39 | 4.58 | 5.02 | 5.15 | 6.81 |
| Nail (Pass/Total) | 3/3 | 3/3 | 3/3 | 3/3 | 3/3 |

As can be seen from Table 2, Examples B-1 to B-4 complete wetting faster than Comparative Example B-1,

and shows a lower pre-gelation ratio and higher polymer conversion ratio after gelling as compared to Comparative Example B-1. In addition, in Comparative Example B-1, lamination is carried out under a high temperature and high pressure condition, unlike Examples B-1 to B-4. Therefore, it can be seen that the separator is in closer contact with the electrodes in Comparative Example B-1, resulting in a longer electrolyte wetting time.

In addition, as can be seen from Table 3, in Comparative Example B-1, the gases generated in the battery cannot be removed with ease, even though the same battery formation step as Examples B-1 and B-2 is carried out. Therefore, the battery according to Comparative Example B-1 shows poor life or resistance characteristics. It can be also seen that Examples B-3 and B-4 provides improved cell stiffness by carrying out the clamp and baking step.

## SET C

### Example C-1

A battery was obtained in the same manner as Example A-1.

### Example C-2

A battery was obtained in the same manner as Example C-1, except that a clamp and baking step of inserting the secondary battery between a pair of jigs facing each other and storing it for 30 minutes while applying a pressure of 5 $kgf/cm^2$ thereto at a temperature of 80°C, as a post-step, was further carried out after carrying out the battery formation step.

### Comparative Example C-1

The same separator as the ceramic coated separator according to Example C-1 was used, except that the content of the binder polymer in the ceramic coated separator was 30 wt%.

An electrode assembly was obtained in the same manner as Example C-1, except that conventional lamination was carried out at a high temperature (80°C) under a high pressure (3 $kgf/cm^2$) when the electrode assembly was assembled.

A battery was obtained in the same manner as Example C-1, except that the non-aqueous electrolyte having the following composition was injected.

(Preparation of Non-aqueous Electrolyte)

A non-aqueous electrolyte was prepared by dissolving $LiPF_6$ in a non-aqueous organic solvent having a composition of ethylene carbonate (EC): ethyl methyl carbonate (EMC)= 30:70 (volume ratio) to 1.0 M.

### Comparative Example C-2

The same separator as the ceramic coated separator according to Example C-1 was used, except that the content of the binder polymer in the ceramic coated separator was 30 wt%.

An electrode assembly was obtained in the same manner as Example C-1, except that conventional lamination was carried out at a high temperature (80°C) under a high pressure (3 $kgf/cm^2$) when the electrode assembly was assembled.

### Comparative Example C-3

A battery was obtained in the same manner as Example C-1, except that the non-aqueous electrolyte having the following composition was injected.

(Preparation of Non-aqueous Electrolyte)

A non-aqueous electrolyte was prepared by dissolving $LiPF_6$ in a non-aqueous organic solvent having a composition of ethylene carbonate (EC): ethyl methyl carbonate (EMC)= 30:70 (volume ratio) to 1.0 M.

### Test Results

The gel polymer electrolyte secondary battery according to each of Examples and Comparative Examples of

SET C was subjected to a vacuum sealing step and a degassing step for 5-30 seconds under a pressure condition of -95 kPa and -105 kPa, respectively.

The results of evaluation of physical properties under each condition are shown in the following Table 4.

[Table 4]

| Pressure | -95 kPa | | | | -105 kPa | | | | |
|---|---|---|---|---|---|---|---|---|---|
| | Residual amount of electrolyte | Cell stiffness% (MPa) | Resistance (mOhm) | 1000 Cycleret ention | Residual amount of electrolyte | Cell stiffness % (MPa) | Resistance (mOhm) | 1000 Cycleret ention | Ramp uplgnition temperature |
| Comp. Ex. C-1 | 120% | 100% (3.7) | 2.20 | 73% | 115% | 105% (3.9) | 2.3 | 70% | 166°C |
| Comp. Ex. C-2 | 123% | 184% (6.81) | 2.35 | 75% | 122% | 197% (7.3) | 2.37 | 75% | 169°C |
| Comp. Ex. C-3 | 115% | 82% (3.05) | 2.08 | 70% | 110% | 89% (3.3) | 2.20 | 69% | 167°C |
| Ex. C-1 | 123% | 120% (4.39) | 2.22 | 76% | 122% | 127% (4.7) | 2.22 | 76% | 178°C |
| Ex. C-2 | 124% | 128%(4.7 4) | 2.11 | 79% | 123% | 131% (4.84) | 2.14 | 76% | 180°C |

(1) Method for Determining Residual Amount of Electrolyte

The total volume of the pores present in the positive electrode active material, negative electrode active material and separator was taken as 100%. Considering the dead space present inside of the battery and the amount of the electrolyte required for cycle consumption, the electrolyte injection amount (excess factor) was set to 125%, and the residual amount of the electrolyte after the degassing step was calculated.

(2) Method for Determining Stiffness

The method for determining the stiffness of the secondary battery is the same as the method described with reference to SET A.

The stiffness of each of Examples C-1 and C-2 and Comparative Examples C-2 and C-3 is expressed in the unit of % based on the stiffness value determined in Comparative Example C-1, taken as 100%.

(3) Methods for Determining Resistance and Life

The methods for determining the resistance and life of the secondary battery are the same as the methods described with reference to SET A.

(4) Determination of Ramp up Ignition Temperature

The temperature of the central portion of the cell was measured upon the ignition, when the cell was heated at a warming rate of 0.5°C/min.

As can be seen from Table 4, Examples C-1 and C-2 and Comparative Example C-2 using a composition for a gel polymer electrolyte show better results in terms of the residual amount of the electrolyte and cell stiffness, as compared to Comparative Examples C-1 and C-3 using a non-aqueous electrolyte.

Particularly, when comparing the sealing and degassing carried out under a pressure of -95 kPa with the sealing and degassing carried out under a pressure of -105 kPa, Examples C-1 and C-2 and Comparative Example C-2 using a composition for a gel polymer provide further increased cell stiffness, while maintaining the residual amount of the electrolyte and resistance at an equivalent level, despite an increase in vacuum degree. On the contrary, Comparative Examples C-1 and C-3 using a non-aqueous electrolyte show a reduced residual amount of the electrolyte and increased cell resistance.

Meanwhile, in the case of Comparative Example C-2, the content of the binder contained in the ceramic coated separator is larger as compared to Examples C-1 and C-2, when forming the electrode assembly, and the lamination

step is carried out under a high temperature and high pressure condition, unlike Examples C-1 and C-2. As a result, Comparative Example C-2 shows poor resistance characteristics and safety. In the case of Examples C-1 and C-2, the separator can retain its physical shape even at high temperature and delay heat shrinking to the highest degree, resulting in excellent safety. Particularly, in the case of Example C-2, the clamp and baking step is further carried out to improve the interfacial adhesion between the separator and the electrode, resulting in a decrease in resistance and further improvement of the cell stiffness.

[Description of Drawing Numerals]

1: Stack table
2: Separator supplying unit
21: Separator
3: Electrode supplying unit
31: First electrode
32: Second electrode
4: Binder applying unit
41: Composition including binder polymer

## Claims

1. A method for manufacturing a gel polymer electrolyte secondary battery, comprising the steps of:

   (S1) preparing a ceramic coated separator and electrodes, wherein the ceramic coated separator comprises a porous substrate and a ceramic coating layer, and the ceramic coating layer comprises a first binder polymer and ceramic particles;
   (S2) carrying out lamination of the separator and electrodes to provide an electrode assembly, wherein a composition comprising a second binder polymer is applied onto at least one surface of the separator or electrodes in a patterned shape, and the separator is folded in a zigzag manner so that the electrodes may be inserted to regions where the separator is overlapped;
   (S3) injecting a composition for a gel polymer electrolyte to the electrode assembly to obtain a battery; and
   (S4) carrying out formation by charging the battery at least twice under the conditions of a temperature of 50°C or higher and a pressure of 0.1-5 $kgf/cm^2$.

2. The method for manufacturing a gel polymer electrolyte secondary battery according to claim 1, wherein the lamination in step (S2) is carried out at a temperature of 30°C or lower.

3. The method for manufacturing a gel polymer electrolyte secondary battery according to claim 1, wherein the lamination in step (S2) is carried out under the ambient pressure condition or under the condition of a pressure of 3 $kgf/cm^2$ or less applied to the electrode assembly.

4. The method for manufacturing a gel polymer electrolyte secondary battery according to claim 1, wherein the lamination step is not carried out under the application of pressure, in step (S2).

5. The method for manufacturing a gel polymer electrolyte secondary battery according to claim 1, wherein the content of the first binder polymer is 0.1-10 wt% based on the total weight of the ceramic coating layer.

6. The method for manufacturing a gel polymer electrolyte secondary battery according to claim 1, wherein the first binder polymer is an acrylate-based binder polymer.

7. The method for manufacturing a gel polymer electrolyte secondary battery according to claim 1, wherein the patterned shape comprises at least one of a dot pattern, a stripe pattern and a grid pattern.

8. The method for manufacturing a gel polymer electrolyte secondary battery according to claim 1, wherein the composition for a gel polymer electrolyte comprises a polymerization initiator having a 10 hour half-life temperature of 60°C or lower, a polymerizable compound, a lithium salt and a nonaqueous organic solvent.

**9.** The method for manufacturing a gel polymer electrolyte secondary battery according to claim 8, wherein the polymerization initiator has a 10 hour half-life temperature of 55°C or lower.

**10.** The method for manufacturing a gel polymer electrolyte secondary battery according to claim 8, wherein the content of the polymerization initiator is 0.1-10 parts by weight based on 100 parts by weight of the composition for a gel polymer electrolyte.

**11.** The method for manufacturing a gel polymer electrolyte secondary battery according to claim 1, wherein the pressure application in step (S4) comprises applying pressure at least once by using a pressurizing device.

**12.** The method for manufacturing a gel polymer electrolyte secondary battery according to claim 1, wherein step (S4) comprises the steps of:

(S4a) carrying out primary charge at a temperature of 50-60°C under a pressure of 0.1-1 $kgf/cm^2$ to 20% or less of the capacity, i.e. state of charge (SOC), of the secondary battery; and
(S4b) carrying out secondary charge at a temperature of 50-60°C under a pressure of 3-5 $kgf/cm^2$ to 15-60% of the capacity, i.e. state of charge (SOC), of the secondary battery.

**13.** The method for manufacturing a gel polymer electrolyte secondary battery according to claim 1, which further comprises the step of:
(S5) storing the battery subjected to formation in step (S4) at a temperature of 60°C or higher under a pressure of 3 $kgf/cm^2$ or more.

**14.** The method for manufacturing a gel polymer electrolyte secondary battery according to claim 13, wherein step (S5) is carried out for 30 minutes to 5 hours.

**15.** The method for manufacturing a gel polymer electrolyte secondary battery according to claim 13, wherein the pressure application in step (S5) comprises applying pressure at least once by using a pressurizing device.

**16.** The method for manufacturing a gel polymer electrolyte secondary battery according to claim 1, which further comprises a step of carrying out vacuum sealing of the battery under a pressure of less than -95 kPa, after step (S3).

**17.** The method for manufacturing a gel polymer electrolyte secondary battery according to claim 16, wherein the vacuum sealing step is carried out under a pressure of - 100 kPa to -120 kPa.

**18.** The method for manufacturing a gel polymer electrolyte secondary battery according to claim 16, wherein the vacuum sealing step is carried out for 5-30 seconds.

**19.** The method for manufacturing a gel polymer electrolyte secondary battery according to claim 1, which further comprises a step of carrying out degassing of the battery under a pressure of less than -95 kPa, after step (S4).

**20.** The method for manufacturing a gel polymer electrolyte secondary battery according to claim 19, wherein the degassing is carried out under a pressure of -100 kPa to -120 kPa.

**21.** A gel polymer electrolyte secondary battery obtained by the method as defined in any one of claims 1 to 20 and having a stiffness of 4.0 MPa or more.

FIG. 1

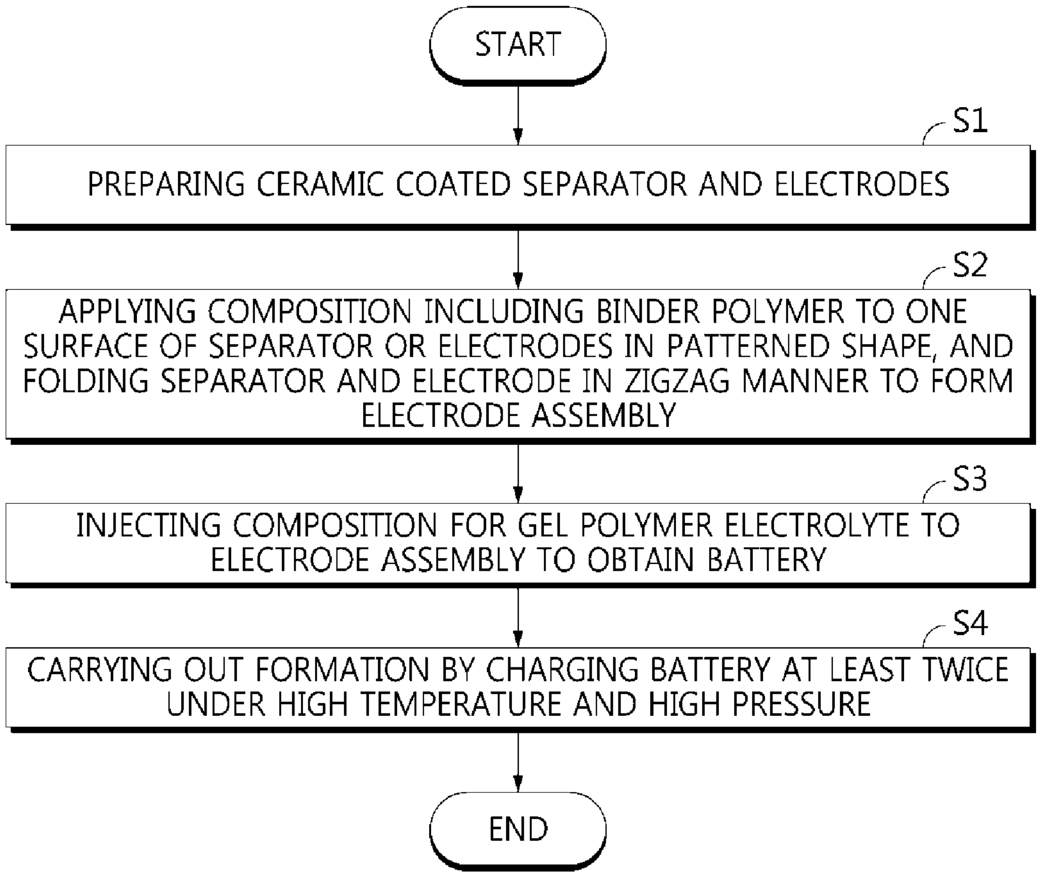
START
S1
PREPARING CERAMIC COATED SEPARATOR AND ELECTRODES
S2
APPLYING COMPOSITION INCLUDING BINDER POLYMER TO ONE SURFACE OF SEPARATOR OR ELECTRODES IN PATTERNED SHAPE, AND FOLDING SEPARATOR AND ELECTRODE IN ZIGZAG MANNER TO FORM ELECTRODE ASSEMBLY
S3
INJECTING COMPOSITION FOR GEL POLYMER ELECTROLYTE TO ELECTRODE ASSEMBLY TO OBTAIN BATTERY
S4
CARRYING OUT FORMATION BY CHARGING BATTERY AT LEAST TWICE UNDER HIGH TEMPERATURE AND HIGH PRESSURE
END

FIG. 2a

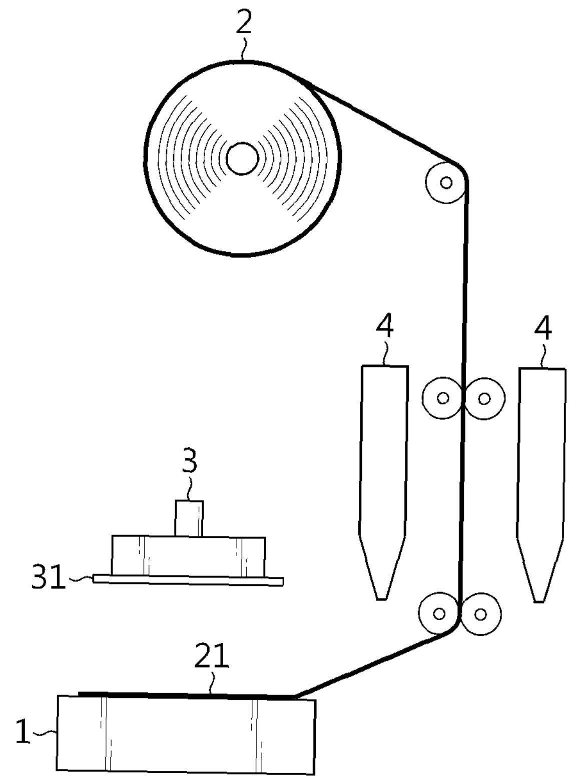

FIG. 2b

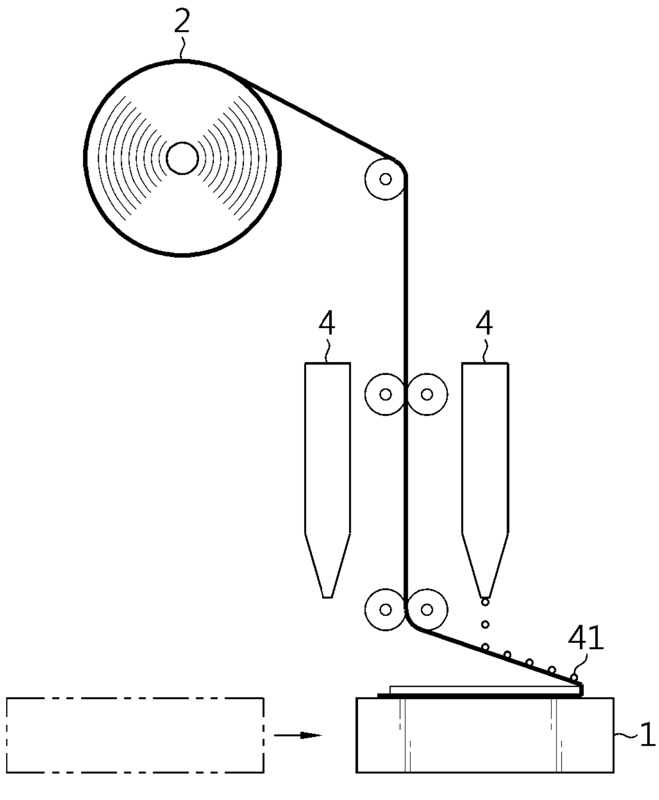

FIG. 2c

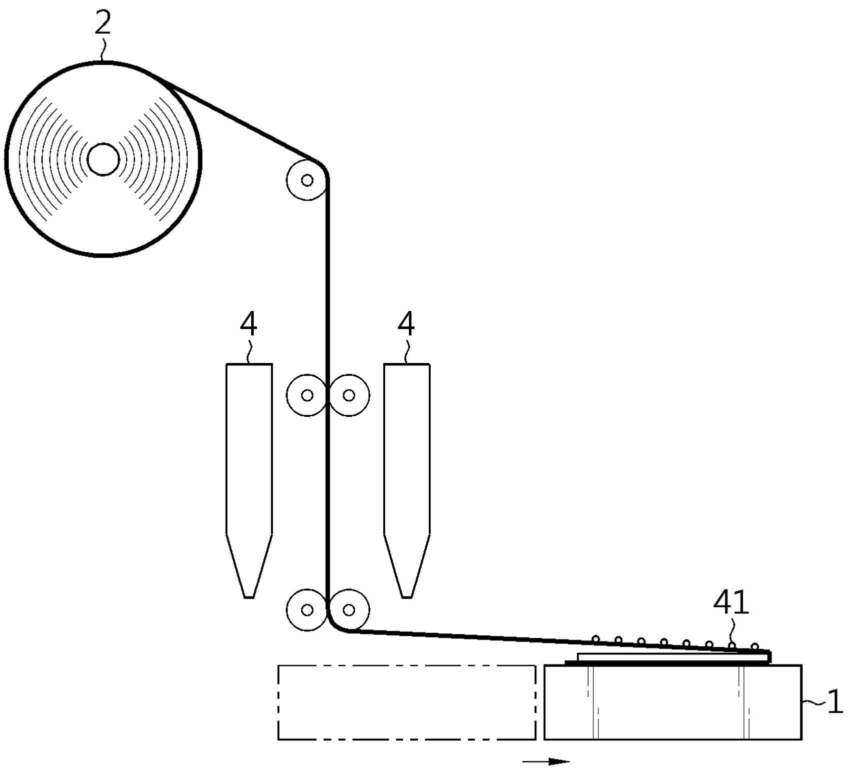

FIG. 2d

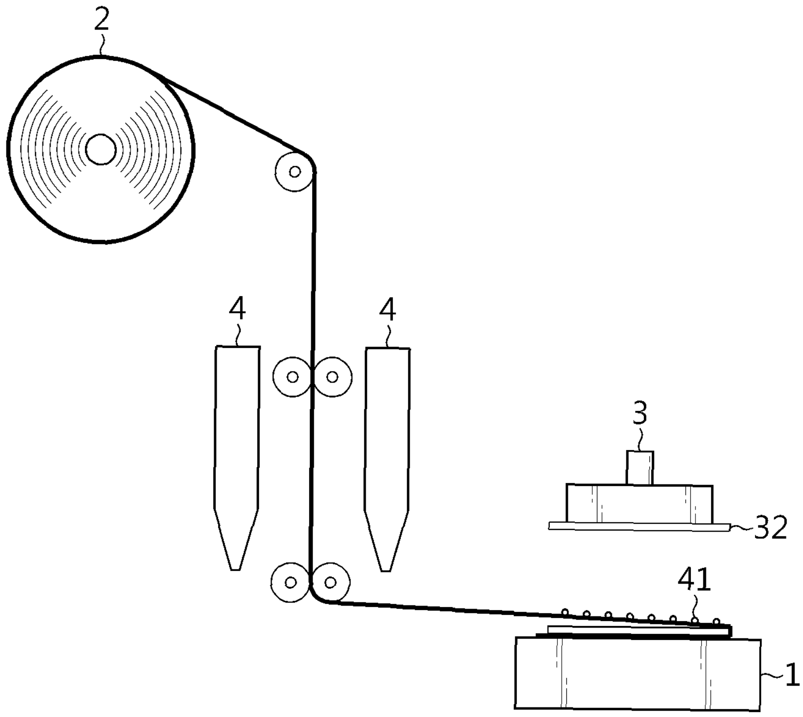


FIG. 2e

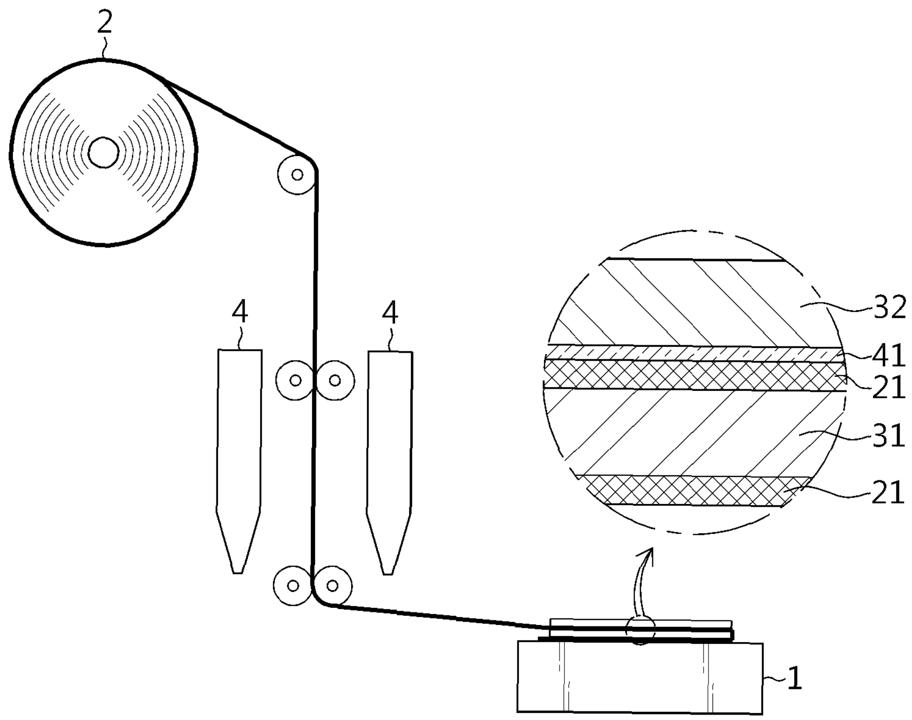

FIG. 2f

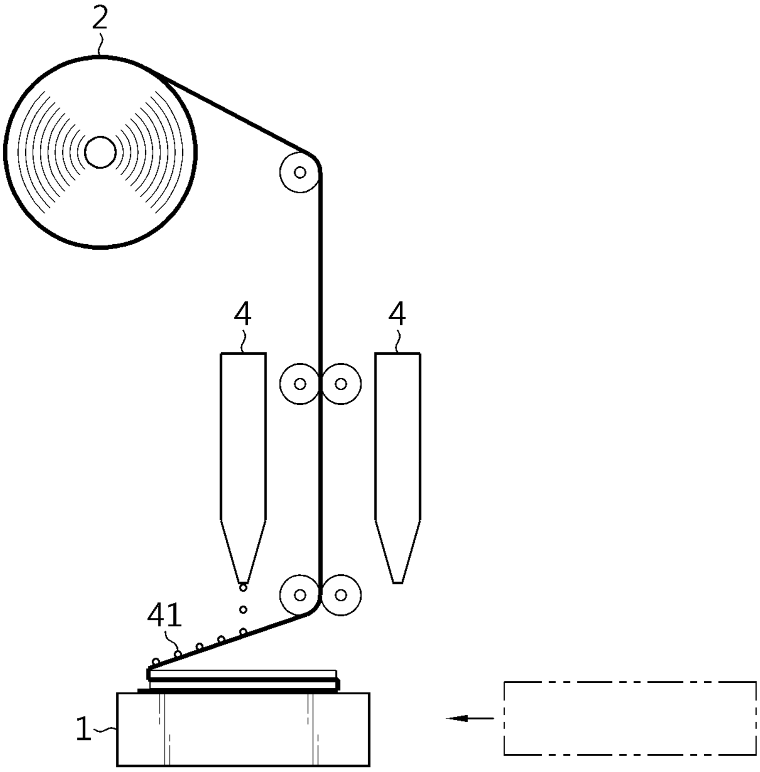


FIG. 3

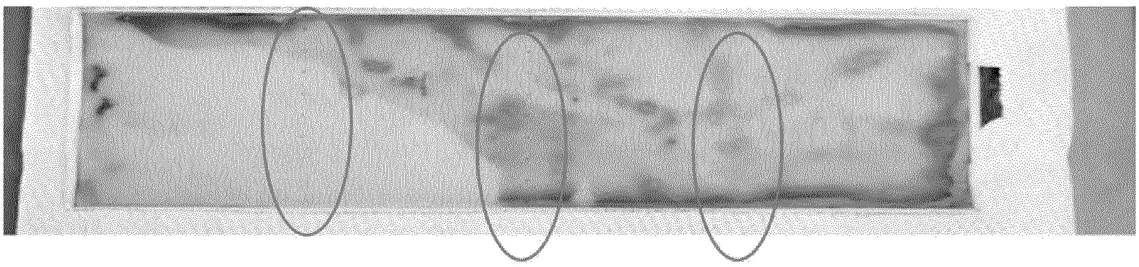

FIG. 4

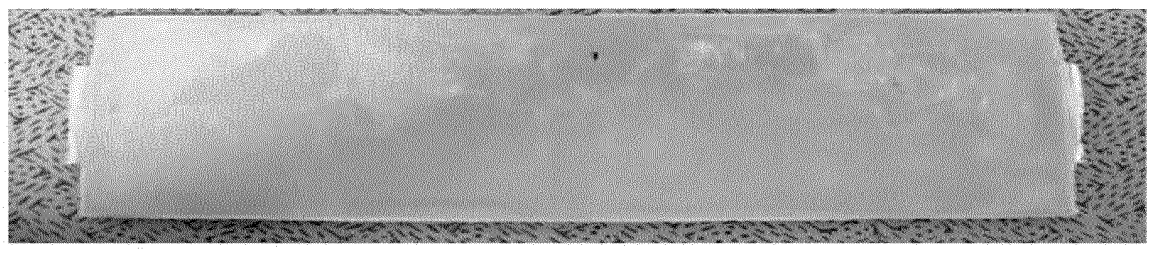

**INTERNATIONAL SEARCH REPORT**

International application No.
**PCT/KR2023/000599**

**A. CLASSIFICATION OF SUBJECT MATTER**

**H01M 10/0583**(2010.01)i; **H01M 50/449**(2021.01)i; **H01M 10/0565**(2010.01)i; **H01M 50/46**(2021.01)i

According to International Patent Classification (IPC) or to both national classification and IPC

**B. FIELDS SEARCHED**

Minimum documentation searched (classification system followed by classification symbols)

H01M 10/0583(2010.01); H01M 10/04(2006.01); H01M 10/0525(2010.01); H01M 10/0565(2010.01); H01M 4/485(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 겔 폴리머 전해질(gel polymer electrolyte), 이차전지(secondary battery), 바인더(binder), 지그재그(zigzag), 충전(charge), 패턴(pattern), 압력(pressure), 디개싱(degassing), 실링(sealing)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2016-0099970 A (LG CHEM, LTD.) 23 August 2016 (2016-08-23)<br>See paragraphs [0056], [0081] and [0091]-[0095]. | 1-21 |
| Y | KR 10-2021-0119787 A (LG ENERGY SOLUTION, LTD.) 06 October 2021 (2021-10-06)<br>See paragraphs [0006], [0040] and [0048]; and figures 2-6. | 1-21 |
| Y | KR 10-2017-0101582 A (LG CHEM, LTD.) 06 September 2017 (2017-09-06)<br>See paragraphs [0033], [0036]-[0038], [0043], [0063], [0090] and [0091]. | 1-21 |
| Y | KR 10-2006-0111829 A (SAMSUNG SDI CO., LTD.) 30 October 2006 (2006-10-30)<br>See claims 9 and 12. | 5,6 |
| Y | KR 10-1835166 B1 (LG CHEM, LTD.) 06 March 2018 (2018-03-06)<br>See claims 11 and 12; and paragraph [0078]. | 8-10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 April 2023** | **19 April 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2023/000599**

**C. DOCUMENTS CONSIDERED TO BE RELEVANT**

| Category* | Citation of document, with indication, where appropriate, of the relevant passages | Relevant to claim No. |
|---|---|---|
| Y | KR 10-2018-0113819 A (LG CHEM, LTD.) 17 October 2018 (2018-10-17)<br>See claim 1; and paragraphs [0104] and [0118]-[0121]. | 13-20 |

Form PCT/ISA/210 (second sheet) (July 2022)

**INTERNATIONAL SEARCH REPORT**
**Information on patent family members**

International application No.
**PCT/KR2023/000599**

| Patent document cited in search report | Publication date (day/month/year) | Patent family member(s) | Publication date (day/month/year) |
|---|---|---|---|
| KR 10-2016-0099970 A | 23 August 2016 | KR 10-1775565 B1 | 19 September 2017 |
| KR 10-2021-0119787 A | 06 October 2021 | CN 115210923 A | 18 October 2022 |
| | | EP 4109610 A1 | 28 December 2022 |
| | | WO 2021-194284 A1 | 30 September 2021 |
| KR 10-2017-0101582 A | 06 September 2017 | None | |
| KR 10-2006-0111829 A | 30 October 2006 | KR 10-0686805 B1 | 26 February 2007 |
| KR 10-1835166 B1 | 06 March 2018 | KR 10-2015-0050083 A | 08 May 2015 |
| KR 10-2018-0113819 A | 17 October 2018 | KR 10-2268399 B1 | 24 June 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020220006079
- KR 1020220006080
- KR 1020220006081
- KR 1020220006082